# EUROPÄISCHE PATENTSCHRIFT

(11) **EP 3 841 844 B1**
(45) Veröffentlichungstag und Bekanntmachung des Hinweises auf die Patenterteilung: **22.05.2024**
(21) Anmeldenummer: 19752674.2
(22) Anmeldetag: 06.08.2019
(51) Int. Cl.: H05B 6/64, F24C 15/00, A21B 3/04

(54) **VERFAHREN ZUM BETREIBEN EINES HAUSHALTS-GARGERÄTS UND HAUSHALTS-GARGERÄT**
METHOD FOR OPERATING A DOMESTIC COOKING APPLIANCE AND DOMESTIC COOKING APPLIANCE
PROCÉDÉ POUR LE FONCTIONNEMENT D'UN APPAREIL DE CUISSON MÉNAGER ET APPAREIL DE CUISSON MÉNAGER

(30) Priorität: 24.08.2018 DE 102018214360
(43) Veröffentlichungstag der Anmeldung: 30.06.2021
(73) Patentinhaber: BSH Hausgeräte GmbH, 81739 München (DE)
(72) Erfinder: EIGNER, Astrid, 84579 Unterneukirchen (DE); KROLIKOWSKI, Kathrin, 93426 Roding (DE)
(86) Internationale Anmeldenummer: PCT/EP2019/071066
(87) Internationale Veröffentlichungsnummer: WO 2020/038710

(56) Entgegenhaltungen:
- EP-A1- 2 966 364
- WO-A1-2017/067671
- DE-A1-102013 105 087
- DE-A1-102013 214 848
- KR-A- 20040 102 843

## Beschreibung

Die Erfindung betrifft ein Verfahren zum Betreiben eines Haushalts-Gargeräts mit einem Garraum, bei dem ein Feuchtigkeitswert in dem Garraum überwacht wird. Die Erfindung betrifft auch ein Haushalts-Gargerät, aufweisend einen Garraum und eine Steuereinrichtung, wobei die Steuereinrichtung dazu eingerichtet ist, das Verfahren ablaufen zu lassen. Die Erfindung ist insbesondere vorteilhaft anwendbar auf Haushalts-Gargeräte, insbesondere Backöfen, mit und ohne Dampfgenerator.

DE 10 2008 040 398 A1 offenbart eine Gargerätevorrichtung mit einer Regelungseinheit, die zur Regelung einer von einer Temperaturkenngröße abweichenden Kenngröße in einem Garraum vorgesehen ist. Die abweichende Kenngröße kann eine Luftfeuchtigkeitskenngröße sein.

DE 10 2012 200 304 A1 und DE 10 2013 105087 A1 (RATIONAL AG [DE]) 20. November 2014 (2014-11-20) offenbaren ein Gargerät mit einem Garraum und mit mindestens einer Lambdasonde zum Erfassen mindestens einer Eigenschaft des Garraums, insbesondere eines Feuchtigkeitsgehalts.

WO 2004/077952 A1 offenbart ein Verfahren zum Steuern eines Garprozesses in dem Garraum eines Gargerätes in Abhängigkeit von dem Taupunkt im Innenraum des Gargeräts, umfassend folgende Schritte: e) Einbringen zumindest eines Garguts und zumindest eines Zubehörs, wie in Form eines Gastronomiebehälters, eines Tellers, eines Blechs, einer Unterlage, einer Einhängeleiter, eines Hordengestells und/oder eines Hordengestellwagens, und/oder zumindest eines Referenzkörpers in den Garraum, f) Ermitteln von zumindest einem Klimaparameter, insbesondere über Temperatur und Feuchte, im Garraum, am Gargut, insbesondere an der Gargutoberfläche, am Zubehör, insbesondere an der Zubehöroberfläche, und/oder am Referenzkörper, insbesondere an der Referenzkörperoberfläche, zumindest teilweise während des Garprozesses, g) Bestimmen des, insbesondere aktuellen, Ausmaßes des Über- oder Unterschreitens des Taupunktes am Gargut, am Zubehör und/oder am Referenzkörper, insbesondere über eine Auswerteeinheit, und d) Anpassen des Klimaparameters im Garraum während des Garprozesses in Abhängigkeit des in Schritt c) bestimmten Ausmaßes des Über- oder Unterschreitens des Taupunktes, so dass das Klima im Garraum, insbesondere die Feuchte im Garraum, die Feuchtezufuhr in den Garraum und/oder die Feuchteabfuhr aus dem Garraum, taupunktgeregelt wird.

US 2009/0134141 A1 offenbart ein Verfahren zum Steuern des Feuchtigkeitsniveaus in einem Garraum eines Ofens, der mit einem Dampfgenerator versehen ist. Das Verfahren umfasst das Überwachen der an den Dampfgenerator gelieferten Leistung, um die Leistung auf einem vorbestimmten Wert zu halten, der mit einer vom Benutzer erzeugten Wahl einer Vielzahl von vorbestimmten Werten entsprechend verschiedenen Werten mindestens eines Garparameter korreliert, insbesondere dem Grad der Bräunung des Nahrungsmittels.

US 2011/0278279 A1 offenbart einen Konvektions- und Dampfofen mit einem Gehäuse, das einen Garraum zur Aufnahme von Nahrungsmitteln, Mittel zur Erwärmung der Atmosphäre in dem Garraum, Mittel zur Erzeugung von Dampf, Mittel zum Ausstoßen von Dampf und ein System zur Erfassung und Regulierung der Feuchtigkeit in dem Garraum enthält. Das Feuchtigkeitserfassungs- und -regelungssystem enthält mindestens eine erste und eine zweite Temperaturerfassungseinrichtung, wobei das Feuchtigkeitserfassungs- und -regelungssystem geeignet ist, die Dampferzeugungseinrichtung und die Dampfausstoßeinrichtung in Reaktion auf die von der ersten und zweiten Temperaturerfassungseinrichtung erfassten Temperaturwerte zu betreiben.

Es ist die **Aufgabe** der vorliegenden Erfindung, die Nachteile des Standes der Technik zumindest teilweise zu überwinden und insbesondere eine Möglichkeit bereitzustellen, ein Garergebnis von Lebensmitteln in einem Garraum eines Haushalts-Gargeräts in Abhängigkeit on einem Feuchtegehalt in dem Garraum zu verbessern.

Diese Aufgabe wird gemäß den Merkmalen der unabhängigen Ansprüche gelöst. Vorteilhafte Ausführungsformen sind Gegenstand der abhängigen Ansprüche, der Beschreibung und der Zeichnungen.

Die Aufgabe wird gelöst durch ein Verfahren zum Betreiben eines Haushalts-Gargeräts mit einem Garraum, bei dem
- ein Feuchtigkeitswert oder Feuchtigkeitsgehalt in dem Garraum überwacht wird und
- dann, wenn der Feuchtigkeitswert einen vorgegebenen Schwellwert erreicht oder unterschreitet, ein erster Hinweis an einen Nutzer ausgegeben wird.

Dieses Verfahren ermöglicht es vorteilhafterweise, dass ein Nutzer ein Garergebnis von Gargut (z.B. von Lebensmitteln oder Gerichten) auf besonders einfache Weise verbessern kann, da ihm durch den Hinweis eine Möglichkeit gegeben wird, bei einem geeigneten Feuchtigkeitsniveau in dem Garraum das Gargut auf individuelle Weise zu beeinflussen. Durch Ausgabe des Hinweises bei dem geeigneten Feuchtigkeitsniveau wird der weitere Vorteil erreicht, dass ein Nutzer nicht selbst den Zeitpunkt das geeignete Feuchtigkeitsniveaus zu bestimmen braucht, was ein vermehrtes/unnötiges Öffnen der Garraumtür mit dem damit einhergehenden Energieverlust vermeidet.

Insbesondere wird der Vorteil erreicht, dass ein Austrocknen des Garguts verhindert werden kann, da einem Nutzer durch den Hinweis darauf aufmerksam gemacht werden kann, die Feuchtigkeit durch Zugabe von Wasser oder Wasserdampf zu erhöhen. Beispielsweise lässt sich so ein Verbrennen aufgrund von zu großer Trockenheit im Garraum, z.B. von Kräuterkrusten, vermeiden. Es ist ein weiterer Vorteil, dass der Nutzer die zugegebene Wassermenge selbst bestimmen kann, um ein individuelles Garergebnis zu erlangen. Das Verfahren vermeidet somit vorteilhafterweise eine Nutzung einer - häufig nur ungenau auf das Gargut abstimmbaren - geräteseitigen Feuchtigkeitsregelung.

Noch ein Vorteil besteht darin, dass das Verfahren auch mit Gargeräten ohne automatische Dampfzugabe oder bei deaktivierter Feuchtigkeitsregelung einsetzbar.

Es ist eine Weiterbildung, dass das Haushalts-Gargerät einen Backofen aufweist.

Das Haushalts-Gargerät weist ferner die Möglichkeit auf, einen Feuchtigkeitswert oder Feuchtigkeitsgehalt in dem Garraum zu überwachen. Dazu kann das Haushalts-Gargerät einen oder mehrere Sensoren aufweisen. Der mindestens eine Sensor kann die Feuchtigkeit (absolute Feuchtigkeit oder relative Feuchtigkeit) direkt oder indirekt messen. Unter einer indirekten Messung kann eine Messung eines Parameters des Garraums oder der Garraumatmosphäre verstanden werden, der nicht die Feuchtigkeit als solche darstellt, aus dem sich aber die Feuchtigkeit ableiten oder berechnen lässt, z.B. ein Sauerstoff-Partialdruck. Ein solcher Sensor kann z.B. eine Lambdasonde sein.

Zur Durchführung des Verfahrens kann der Feuchtigkeitswert direkt gemessen oder abgeleitet werden und dann als Messgröße verwendet werden. Alternativ kann ein für die Feuchtigkeit repräsentativer Wert eines Parameters, aus dem sich die Feuchtigkeit ableiten oder berechnen lässt, direkt - also ohne Berechnung des Feuchtigkeitswerts - verwendet werden, z.B. der Sauerstoff-Partialdruck als solcher.

Der Hinweis an den Nutzer kann an dem Haushalts-Gargerät ausgegeben werden (z.B. an einer Anzeigeeinheit oder Display) und/oder an ein Nutzerendgerät wie ein Smartphone, ein Tablet-PC, einen Laptop usw. übermittelt werden, z.B. als elektronische Nachricht.

Es ist eine Ausgestaltung, dass Hinweis einen Vorschlag umfasst, einen Feuchtigkeitswert oder Feuchtigkeitsgehalt in dem Garraum zu erhöhen. Dadurch wird ein Nutzer vorteilhafterweise darauf aufmerksam gemacht, dass er nun Wasser oder Wasserdampf in den Garraum einbringen sollte, um ein besonders gutes Garergebnis zu erreichen. Im Gegensatz zu einer automatischen Feuchtigkeitsregelung wird dem Nutzer hierbei die Möglichkeit eröffnet, die Wasser- oder Dampfmenge selbst zu wählen. Auch kann der Nutzer eine Wasser- oder Dampfzugabe zu dem aktuellen Zeitpunkt bewusst unterlassen, falls er dies - z.B. nach Prüfung des Garguts - für sinnvoll hält.

Es ist eine Ausgestaltung, dass das Haushalts-Gargerät dampferzeugerlos ausgestaltet ist, d.h., dass das Haushaltsgerät keinen Dampferzeuger aufweist. Ein dampferzeugerloses Haushalts-Gargerät kann ein Haushalts-Gargerät, insbesondere Backofen, ohne Dampferzeugungsfunktion umfassen. Der Nutzer kann dann Wasser in den Garraum eingeben, indem er Wasser auf den Boden des Garraums aufgibt, indem er eine mit Wasser gefüllte Schale in den Garraum stellt oder indem er Wasser zu dem Gargut hinzugibt.

Es ist eine Ausgestaltung, dass das Haushalts-Gargerät einen Dampferzeuger aufweist, der zur manuellen Auslösung mindestens eines Dampfstoßes ausgebildet ist. Der Nutzer kann dann Wasserdampf in individueller Menge in den Garraum eingeben, indem er den Dampferzeuger manuell aktiviert. Ein solcher Dampferzeuger kann insbesondere außerhalb des Garraums angebracht sein. Zur Durchführung des Verfahrens ist eine automatische Feuchtigkeitsregelung insbesondere deaktiviert.

Das Verfahren ist aber auch vorteilhaft einsetzbar, wenn das Haushalts-Gargerät eine in einem Boden des Garraums vorhandene Verdampferschale aufweist. Der Nachteil der Verdampferschale besteht darin, dass darin befindliches Wasser dann, wenn die Garraumtemperatur die Siedetemperatur von Wasser merklich überschreitet, unkontrolliert in den Garraum abgegeben wird. Das Verfahren kann mit anfänglich gefüllter Verdampferschale oder mit anfänglich leerer Verdampferschale durchgeführt werden.

Es ist eine Ausgestaltung, dass der Hinweis einen Vorschlag umfasst, dem Garraum Lebensmittel hinzuzugeben. So wird der Vorteil erreicht, dass - auch unabhängig von einer möglichen Erhöhung einer Feuchtigkeit in dem Garraum - Lebensmittel zum richtigen Zeitpunkt/Feuchtigkeitswert des Garprozesses zugegeben werden können. Beispielsweise kann ein Hinweis auf eine Zugabe von Kräutern oder Gewürzen gegeben werden, wenn der Feuchtigkeitswert in dem Garraum so weit auf den Schwellwert abgesunken ist, dass diese ihren Geschmack besonders effektiv entfalten oder abgegeben können.

Jedoch ist die in dem Hinweis enthaltene Information grundsätzlich nicht beschränkt.

Es ist eine Ausgestaltung, dass
- der Feuchtigkeitswert in dem Garraum nach Ausgeben des Hinweises weiter überwacht wird und
- dann, wenn der Feuchtigkeitswert einen weiteren vorgegebenen Schwellwert erreicht oder unterschreitet, ein weiterer Hinweis ausgegeben wird.

Dadurch wird der Vorteil erreicht, dass ein Nutzer über den Feuchtigkeitsgehalt oder Feuchtigkeitswert in dem Garraum noch genauer, insbesondere mehrstufig, informiert werden kann. Insbesondere kann der weitere Schwellwert einem geringeren Feuchtigkeitswert in dem Garraum entsprechen. So wird der weitere Vorteil erreicht, dass der mit Erreichen des weiteren Schwellwerts ausgegebene Hinweis als "Sicherheitshinweis" dienen kann, welcher einen Nutzer auf ein Erreichen eines kritisch niedrigen Feuchtigkeitswerts hinweisen kann. Auch können so Hinweise unterschiedlicher Art (z.B. betreffend eine Hinzugabe von Wasser und eine Behandlung von Lebensmitteln auf andere Art) oder weniger dringliche und dringlichere Hinweise für unterschiedliche Feuchtigkeitsniveaus ausgegeben werden. Jedoch können die ausgegebenen Hinweise auch gleich sein. Die obigen Schritte können auch mehrfach durchlaufen werden, d.h., dass der Feuchtigkeitswert in dem Garraum nach Ausgeben des weiteren Hinweises weiter überwacht wird und dann, wenn der Feuchtigkeitswert noch einen weiteren vorgegebenen Schwellwert erreicht oder unterschreitet, noch ein weiterer Hinweis ausgegeben wird, usw.

Es ist eine Ausgestaltung, dass ein Schwellwert aus einem zu einem vorgegebenen Zeitpunkt bestimmten Referenz-Feuchtigkeitswert, multipliziert mit einem vorgegebenen zugehörigen Anteilsfaktor, bestimmt wird. Dies kann auch als T = fr · y ausgedrückt werden, wobei T den Schwellwert, fr den Referenz-Feuchtigkeitswert und y den Anteilsfaktor bezeichnet. Der Anteilsfaktor liegt insbesondere in einem Bereich 0 < y < 1, speziell einem Bereich 0,5 < y < 0,9.

Wird der der Feuchtigkeitswert in dem Garraum nach Ausgeben eines Hinweises weiter überwacht, können sich die Schwellwerte unterschiedlicher Überwachungsabschnitte oder Überwachungsschleifen unterscheiden.

Es ist eine Weiterbildung, dass vor dem erstmaligen Überwachen des Feuchtigkeitswerts in dem Garraum zu einem (Referenz-)Zeitpunkt t0 der dann in dem Garraum herrschende Feuchtigkeitswert f (t0) als ein erster Referenz-Feuchtigkeitswert fr (t0) gespeichert oder eingestellt wird, d.h., dass fr (t0) = f (t0) angenommen wird. Daraus wird ein erster Schwellwert T (t0) = fr (t0) · y bestimmt, der während der Überwachung mit dem aktuellen Feuchtigkeitswert f (t) mit t > t0 verglichen wird, insbesondere in aufeinanderfolgenden - insbesondere regelmäßigen - Abständen. Wenn der aktuelle Feuchtigkeitswert f (t) den Schwellwert T (t0) erreicht oder unterschreitet, d.h., festgestellt wird, dass f (t) ≤ T (t0) gilt, wird ein Hinweis ausgegeben. Folgend auf den Hinweis kann zu einem Zeitpunkt t1 > t0 der dann in dem Garraum herrschende Feuchtigkeitswert f (t1) als ein zweiter Referenz-Feuchtigkeitswert fr (t1) gespeichert oder eingestellt wird, d.h., dass fr (t1) = f (t1) angenommen wird. Daraus wird ein zweiter Schwellwert T (t1) = fr (t1) · y bestimmt, der während der Überwachung mit dem aktuellen Feuchtigkeitswert f (t) mit t > t1 verglichen wird, insbesondere in aufeinanderfolgenden - insbesondere regelmäßigen - Abständen. Wenn der aktuelle Feuchtigkeitswert f (t) den Schwellwert T (t1) erreicht oder unterschreitet, d.h., festgestellt wird, dass f (t) ≤ T (t1) gilt, wird ein weiterer Hinweis ausgegeben. Dies kann mehrfach für unterschiedliche Referenzzeitpunkte t0, t1, t2, ... usw. durchgeführt werden.

Es ist eine Weiterbildung, dass die Anteilsfaktoren y zur Berechnung mindestens zweier unterschiedlicher Schwellwerte T (ti) und T(ti) gleich oder konstant ist.

Es ist eine Weiterbildung, dass der Anteilsfaktor y zur Berechnung unterschiedlicher Schwellwerte T (ti) und T(ti) unterschiedlich ist.

Es ist eine Ausgestaltung, dass zu Beginn des Verfahrens ein gewünschtes Feuchtigkeitsniveau (z.B. trocken oder feucht) in dem Garraum aus einer Gruppe mehrerer vorgegebener Feuchtigkeitsniveaus abgefragt wird und der Anteilsfaktor abhängig von dem ausgewählten Feuchtigkeitsniveau festgelegt oder eingestellt wird. So wird der Vorteil erreicht, dass ein Nutzer das Feuchtigkeitsniveau ganz besonders bedienerfreundliche Weise auf das Gargut abstimmen kann. Beispielsweise kann ein höheres Feuchtigkeitsniveau oder eine feuchte(re) Garraumatmosphäre für bestimmte Gerichte wie Schmorgerichte oder Gerichte im Kräutermantel besonders geeignet sein, während ein niedrigeres Feuchtigkeitsniveau oder eine trocken(er)e Garraumatmosphäre für Gerichte besonders geeignet sein kann, bei denen Kräuter oder andere Gewürze in den Garraum hinzugegeben werden soll, die die erst bei trockenerer Garraumatmosphäre ihren Geschmack besonders effektiv entfalten.

Allgemein kann der Anteilsfaktor von einem Nutzer individuell eingestellt werden, z.B. abgestimmt auf ein bestimmtes Lebensmittel oder Gericht. Der Nutzer kann die Einstellung des Anteilsfaktors beispielsweise anhand eigener Notizen, von Tabellen oder menügesteuert über das Haushalts-Gargerät vornehmen.

Es ist eine Ausgestaltung, dass der Anteilsfaktor abhängig von einem ausgewählten Garprogramm automatisch eingestellt wird.

Die Aufgabe wird auch gelöst durch ein Haushalts-Gargerät, das dazu eingerichtet ist, das Verfahren wie oben beschrieben ablaufen zu lassen. Das Haushalts-Gargerät kann analog zu dem Verfahren ausgebildet werden und weist die gleichen Vorteile auf.

Das Haushalts-Gargerät weist insbesondere einen Garraum und eine Steuereinrichtung auf, wobei die Steuereinrichtung dazu eingerichtet ist, das Verfahren ablaufen zu lassen. Das Haushalts-Gargerät kann analog zu dem Verfahren ausgebildet werden und ergibt die gleichen Vorteile.

So ist es eine Ausgestaltung, dass das Haushaltsgerät ein dampferzeugerloses Haushaltsgerät, insbesondere Backofen, ist.

Auch ist es eine Ausgestaltung, dass das Haushaltsgerät, insbesondere Backofen, eine Dampferzeugungsfunktionalität aufweist. Dazu kann es einen außerhalb des Garraums angeordneten Dampfgenerator aufweisen. Insbesondere ist dann eine Feuchtigkeitsregelung deaktivierbar und eine manuelle Aktivierung des Dampfgenerators aktivierbar.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt ein Ablaufdiagramm des Verfahrens gemäß einem ersten Ausführungsbeispiel mit einem zugehörigen Haushalts-Gargerät;
- Fig.2: zeigt ein Ablaufdiagramm des Verfahrens gemäß einem ersten Ausführungsbeispiel;
- Fig.3: zeigt ein Ablaufdiagramm des Verfahrens gemäß einem dritten Ausführungsbeispiel;
- Fig.4: zeigt ein Ablaufdiagramm des Verfahrens gemäß einem vierten Ausführungsbeispiel.

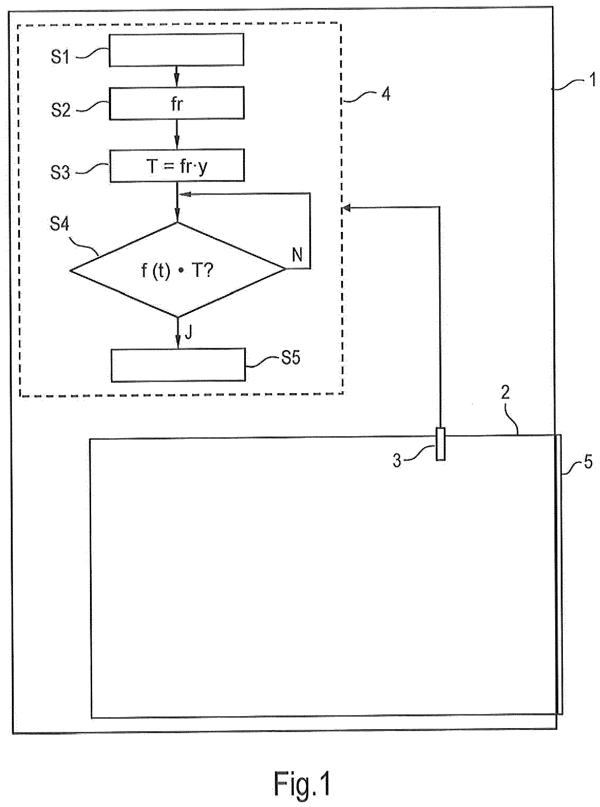

**Fig.1** zeigt ein Ablaufdiagramm des Verfahrens gemäß einem ersten Ausführungsbeispiel.

In einem Schritt S1 wird ein Garbetrieb eines Haushalts-Gargeräts 1 gestartet. Dies kann z.B. durch Aktivieren eines Start-Knopfs durch einen Nutzer und/oder programmgesteuert geschehen. Der Nutzer kann zur Durchführung des Garbetriebs zugehörige Einstellungen (z.B. eine gewünschte Soll-Garraumtemperatur, Ablaufdauer, Art des Garguts, usw.) direkt und/oder über eine Wahl eines Garprogramms eingegeben haben.

Das Haushalts-Gargerät 1 weist einen Garraum 2 und einen zur Bestimmung einer z.B. absoluten oder relativen) Feuchtigkeit in dem Garraum 2 geeigneten Sensor 3 auf, z.B. eine Lambdasonde. Der Sensor 3 ist mit einer Steuereinrichtung 4 verbunden, welche die Messwerte des Sensors 3 auswerten kann. Für den Fall eines Vorliegens einer Lambdasonde kann die Steuereinrichtung 4 beispielsweise dazu eingerichtet sein, einen davon gemessenen Sauerstoff-Partialdruck in entsprechende Feuchtigkeitswerte umzurechnen. Jedoch kann auf die Umrechnung auch verzichtet werden, und es kann der Messwert als solcher zur Durchführung des Verfahrens als Repräsentant für einen Feuchtigkeitswert verwendet werden.

In einem folgenden Schritt S2 wird mittels der Steuereinrichtung 4 zu einem Anfangszeitpunkt t0 ein aktueller Feuchtigkeitswert des Garraums 2 oder einer Garraumatmosphäre in dem Garraum 2 als Referenz-Feuchtigkeitswert fr (t0) oder Referenz-Feuchtigkeitsgehalt bestimmt, z.B. bei Vorhandensein eines Sauerstoffsensors repräsentiert durch einen Wert pO2 (t0) eines Sauerstoffpartialdrucks. Der Feuchtigkeitswert kann eine absolute oder relative Feuchtigkeit darstellen.

In einem Schritt S3 wird mittels der Steuereinrichtung 4 aus dem Referenz-Feuchtigkeitswert fr (t0) ein Schwellwert T gemäß T = fr (t0) · y mit y < 1 berechnet. Der Schwellwert T entspricht somit einem durch den "Anteilsfaktor" y festgelegten Feuchtigkeitsanteil des Referenz-Feuchtigkeitswerts fr (t0).

In einem vierten Schritt S4 wird mittels der Steuereinrichtung 4 ein aktueller Feuchtigkeitswert f (t) in dem Garraum 2 zu folgenden Zeitpunkten t mit t > t0 überwacht. Wenn der aktuelle Feuchtigkeitswert f (t) oberhalb des Schwellwerts T liegt ("N"), wird die Überwachung schleifenartig weitergeführt, z.B. zu regelmäßig aufeinander abfolgenden Zeitpunkten t.

Wenn in Schritt S4 der Feuchtigkeitswert f (t) hingegen den Schwellwert T erreicht oder unterschreitet ("J"), wird in einem Schritt S5 ein Hinweis oder eine Meldung an einen Nutzer ausgegeben, der den Nutzer auf das Absinken des aktuellen Feuchtigkeitswerts f (t) auf den Schwellwert T aufmerksam macht. Der Hinweis kann an einer Anzeigeeinrichtung des Haushalts-Gargeräts ausgegeben werden und/oder an ein Nutzerendgerät (z.B. ein Smartphone) des Nutzers übermittelt werden. Das Ausgeben des Hinweises kann akustisch untermalt werden, z.B. durch Ausgeben eines Hinweistons.

Der Nutzer kann auf den Hinweis hin den Feuchtigkeitswert bei Bedarf erhöhen. Dies kann bei Haushalts-Gargeräten ohne Dampfgenerator beispielsweise so geschehen, dass ein Nutzer eine den Garraum 2 verschließende Garraumtür 5 öffnet und Wasser in den Garraum 2 gibt. Bei Haushalts-Gargeräten mit einem Dampfgenerator kann der Nutzer beispielsweise ein entsprechendes Betätigungsfeld an dem Haushalts-Gargerät oder das Haushalts-Gargerät ferngesteuert über das Nutzerendgerät betätigen, um den Dampfgenerator zum Dampfabgabe in den Garraum 2 zu aktivieren, z.B. in Form eines oder mehrerer Dampfstöße.

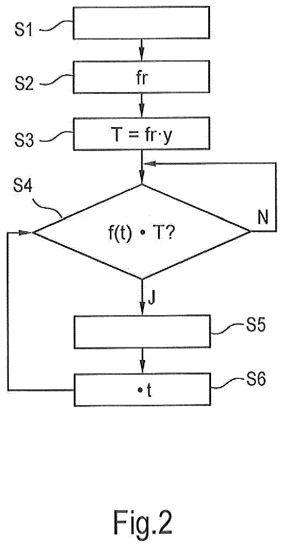

**Fig.2** zeigt ein Ablaufdiagramm des Verfahrens gemäß einem zweiten Ausführungsbeispiel. In diesem Ausführungsbeispiel werden die Schritte S1 bis S5 analog zu dem Verfahrens gemäß einem ersten Ausführungsbeispiel durchgeführt.

Jedoch wird nun folgend auf Schritt S5 in einem Schritt S6 mittels der Steuereinrichtung 4 eine vorgegebene Wartezeit(dauer) Δt (z.B. eine oder zwei Minuten) abgewartet und dann zurück zu Schritt S4 verzweigt. Ist innerhalb der Wartezeit Δt der Feuchtigkeitswert nicht über den Schwellwert T angestiegen, wird in Schritt S4 der Hinweis erneut ausgegeben.

Die Wartezeit Δt kann in einer Variante mit Ausgabe des Hinweises in Schritt S5 beginnen.

In einer anderen Variante kann die Wartezeit Δt mit Erkennen eines Öffnungs- und Schließvorgangs der Garraumtür 5 beginnen, ggf. unter der Randbedingung, dass die Garraumtür 5 einen Mindestdauer geöffnet worden ist. Diese Variante ist besonders vorteilhaft für Haushalts-Gargeräte ohne Dampfgenerator oder nur mit Verdampferschale, da sie einen Hinweis gibt, dass der Nutzer Flüssigkeit in den Garraum 2 eingefüllt hat und dazu die Garraumtür 5 ausreichend lange geöffnet hat.

In noch einer anderen Variante kann die Wartezeit Δt mit eines Auslösens eines Dampfstoßes durch einen Nutzer erfolgen, falls das Haushalts-Gargerät mit einem Dampfgenerator ausgestattet ist.

In einer Weiterbildung sind die in Schritt S5 ausgegebenen Hinweise gleich. In einer anderen Weiterbildung können sich die Hinweise unterscheiden. So kann ein auf den ersten Hinweis folgender Hinweis einen Nutzer eindringlicher auf das Erreichen des Schwellwerts T hinweisen.

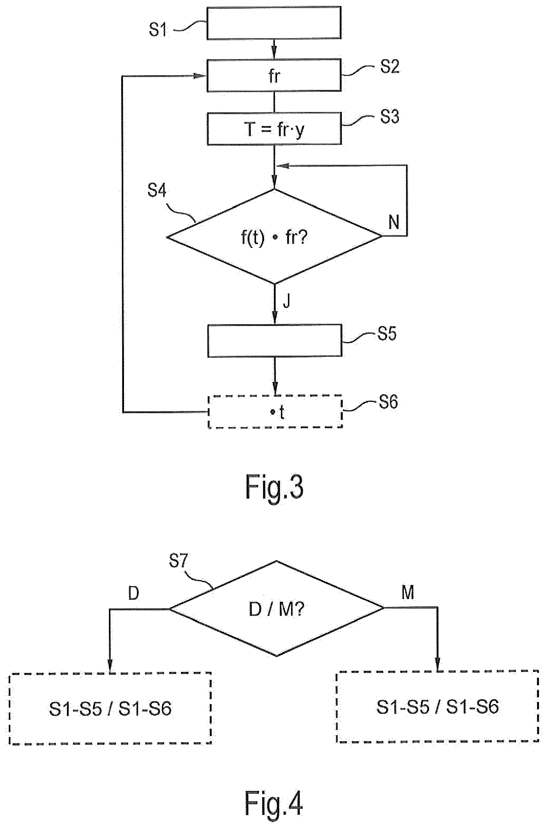

**Fig.3** zeigt ein Ablaufdiagramm des Verfahrens gemäß einem dritten Ausführungsbeispiel. In diesem Ausführungsbeispiel werden die Schritte S1 bis S5 analog zu dem Verfahrens gemäß ersten oder dem zweiten Ausführungsbeispiel durchgeführt.

Mit Ausgabe des Hinweises in Schritt S5 (optional nach einer Wartezeit Δt analog zu Schritt S6 gemäß dem zweiten Ausführungsbeispiel) wird zu Schritt S3 zurückverzweigt. Dadurch wird zu einem Zeitpunkt t1 mit t1 > t0 der Feuchtigkeitswert f (t) als neuer Referenz-Feuchtigkeitswert fr (t1) festgelegt und Verfahrensschritt S4 mit einem neuen Schwellwert T = fr (t1) · y erneut durchlaufen.

Erreicht oder unterschreitet in Schritt S4 der aktuelle Feuchtigkeitswert f (t) den neuen Schwellwert T ("J"), wird in Schritt S5 erneut ein Hinweis an einen Nutzer ausgegeben, der den Nutzer auf das Absinken des aktuellen Feuchtigkeitswerts f (t) auf den neuen Schwellwert T aufmerksam macht.

Diese Anpassung des Referenz-Feuchtigkeitswerts fr und damit des Schwellwerts T kann grundsätzlich beliebig oft durchlaufen werden oder auf eine Höchstzahl beschränkt werden. Insbesondere ist es möglich, nur die zwei Referenz-Feuchtigkeitswerte fr (t0) und fr (t1) bzw. nur die Schwellwerte T (t0) und T (t1) zu verwenden.

Die Schwellwerte T (ti) mit i = 0, 1, 2, ... können also unterschiedlich ausfallen, da die zu den Zeitpunkten ti festgelegten Referenz-Feuchtigkeitswerte fr (ti) unterschiedlich sein können.

In einer Weiterbildung sind die Anteilsfaktoren y während des Verfahrens konstant.

In einer anderen Weiterbildung können zumindest zwei Anteilsfaktoren y (ti), y(tj) mit j > i, die zur Berechnung der Schwellwerte T (ti) bzw. T (tj) herangezogen werden, unterschiedlich sein. Insbesondere kann der Anteilsfaktor y (t0) bei einem ersten Durchlaufen der Schleife von Schritt S4 höher sein als der Anteilsfaktor y (t1) bei einem weiteren Durchlaufen der Schleife von Schritt S4 nach Rücksprung von Schritt S5 oder S6. Während der Anteilsfaktor y (t0) einem zum Erreichen eines besonders guten Garergebnisses Wert entsprechen kann, kann der Anteilsfaktor y (t1) dann ein Erreichen eines kritischen Feuchtigkeitsbereichs anzeigen und somit einem "Sicherheitswert" entsprechen.

Die nach dem ersten Durchlaufen der Schleife von Schritt S4 und die nach dem weiteren Durchlaufen der Schleife von Schritt S4 ausgegebenen Hinweise können sich auch hier optional unterscheiden. So kann der erste Hinweis z.B. "Bitte Wasser nachgeben" o.ä. lauten, während der zweite Hinweis ("Sicherheitshinweis") z.B. "Achtung: Garraum wird kritisch trocken, bitte Wasser nachgeben" o.ä. lauten kann. Jedoch können die Hinweise alternativ auch die gleichen sein.

**Fig.4** zeigt ein Ablaufdiagramm des Verfahrens gemäß einem vierten Ausführungsbeispiel. Nun ist dem Verfahren den Schritten S1 bis S5 oder S1 bis S6 gemäß dem ersten bis dritten Ausführungsbeispiel ein Schritt S7 vorgeschaltet.

In Schritt S7 wird mittels der Steuereinrichtung 4 abgefragt, ob ein Nutzer eine bestimmte, über deren Feuchtigkeitsniveau bestimmte Art von Garraum-Atmosphäre oder "Garraummilieu" aus einer Gruppe mehrerer Arten von Garraum-Atmosphären auswählen möchte. Hier ist beispielhaft eine mögliche Wahl aus zwei Garraum-Atmosphären dargestellt, die als "feuchte Garraumatmosphäre" M und "trockene Garraumatmosphäre" D bezeichnet werden können. Beispielsweise kann die feuchte(re) Garraumatmosphäre für bestimmte Gerichte wie Schmorgerichte oder Gerichte im Kräutermantel besonders geeignet sein, während die trocken(er)e Garraumatmosphäre für Gerichte besonders geeignet sein kann, bei denen Kräuter oder andere Gewürze hinzugegeben werden soll, die die erst bei trockenerer Garraumatmosphäre ihren Geschmack entfalten.

Die unterschiedlichen Garraum-Atmosphären weisen unterschiedliche Anteilsfaktoren y auf. Ein Nutzer kann somit vor Beginn eines Garbetriebs oder Garablaufs festlegen kann, ob der Garbetrieb mit eher feuchten oder eher trockenen Bedingungen in dem Garraum 2 ablaufen soll.

Es ist eine Weiterbildung, dass der Anteilsfaktor y bei ausgewählter trockenerer Garraum-Atmosphäre geringer ist als bei ausgewählter feuchterer Garraum-Atmosphäre. Jedoch kann grundsätzlich der Anteilsfaktor y bei trockenerer Garraum-Atmosphäre auch höher sein als bei feuchterer Garraum-Atmosphäre.

Zusätzlich kann sich der Ablauf der Schritte S1 bis S5 oder S1 bis S6 für unterschiedliche Garraum-Atmosphären beispielsweise auch dadurch unterscheiden, dass der Anteilsfaktor y für eine der Garraum-Atmosphären (z.B. für die feuchtere Garraum-Atmosphäre) konstant bleibt, während er sich für eine andere der Garraum-Atmosphären (z.B. für die trockenere Garraum-Atmosphäre) ändert, z.B. wie in Fig.3 beschrieben. Insbesondere kann bei einem sich ändernden Anteilsfaktor y ein nach einem zweiten Durchlaufen der Sicherheitsschleife in Schritt S4 geänderter Anteilsfaktor y einen "Sicherheits"-Wert annehmen.

Außerdem können sich die Hinweise für die unterschiedlichen Garraum-Atmosphären unterscheiden. Während z.B. die Hinweise für eine feuchtere Garraum-Atmosphäre Hinweise auf ein Erreichen des Schwellwerts und/oder einen Sicherheitshinweis umfassen können, kann bei trockener Garraum-Atmosphäre auch mindestens ein Hinweis ausgegeben werden, dass der Nutzer nun Gewürze wie Kräuter o.ä. zugeben kann. Die Gewürze/Kräuter können, z.B. in einem Schälchen, in den Garraum 2 gestellt werden, um deren Aroma noch besser ins Lebensmittel aufnehmen zu können.

Die Hinweise sind also allgemein nicht darauf beschränkt, die Feuchtigkeit in dem Garraum 2 zu erhöhen, sondern können allgemeine Anweisungen sein, um ein Garergebnis zu verbessern. Allgemein können die Hinweise auch von einer Art des in dem Garraum 2 zubereitenden Lebensmittels oder Gerichts abhängig sein. Die Art des Lebensmittels oder Gerichts kann von einem Nutzer direkt (über einen Bedieneinrichtung des Haushalts-Gargeräts oder über ein Nutzerendgerät) eingegeben werden oder kann mittels eines Garprogramms bestimmt werden.

### Bezugszeichenliste

- 1: Haushalts-Gargerät
- 2: Garraum
- 3: Sensor
- 4: Steuereinrichtung
- 5: Garraumtür
- f: Aktueller Feuchtigkeitswert
- fr: Referenz-Feuchtigkeitswert
- D: Trockene Garraum-Atmosphäre
- M: Feuchte Garraum-Atmosphäre
- S1-S7: Verfahrensschritte
- T: Schwellwert
- t: Zeitpunkt
- Δt: Wartezeit
- y: Anteilsfaktor

## Patentansprüche

1. Verfahren (S1-S7) zum Betreiben eines Haushalts-Gargeräts (1) mit einem Garraum (2), bei dem
- ein Feuchtigkeitswert (f) in dem Garraum (2) überwacht wird (S4) und
- dann, wenn der Feuchtigkeitswert (f) einen vorgegebenen Schwellwert (T (t0)) erreicht oder unterschreitet, ein Hinweis ausgegeben wird (S5),
wobei
- der Schwellwert (T(t0)) aus einem zu einem vorgegebenen Zeitpunkt (t0) bestimmten Referenz-Feuchtigkeitswert (fr (t0)), multipliziert mit einem vorgegebenen zugehörigen Anteilsfaktor (y) mit 0 < y < 1 bestimmt wird und
- folgend der Feuchtigkeitswert (f) in dem Garraum (2) nach Ausgeben des Hinweises weiter überwacht wird (S4) und
- dann, wenn der Feuchtigkeitswert (f) einen weiteren vorgegebenen Schwellwert (T (t1)), der niedriger ist als der zuvor bestimmte Schwellwert (T(t0)), erreicht oder unterschreitet, ein weiterer Hinweis ausgegeben wird (S5).

2. Verfahren (S1-S7) nach Anspruch 1, bei dem der weitere vorgegebene Schwellwert (T (t1)) einem nach Ausgabe des vorhergehenden Hinweises herrschenden Feuchtigkeitswert (f (t1)) in dem Garraum (2), multipliziert mit einem vorgegebenen zugehörigen Anteilsfaktor (y) mit 0 < y < 1 entspricht.

3. Verfahren (S1-S7) nach einem der vorhergehenden Ansprüche, bei dem vor dem erstmaligen Überwachen des Feuchtigkeitswerts (f) in dem Garraum (2) zu einem vorgegebenen Zeitpunkt (t0) der dann in dem Garraum (2) herrschende Feuchtigkeitswert (f (t0)) als ein erster Referenz-Feuchtigkeitswert (fr (t0)) angenommen wird.

4. Verfahren (S1-S7) nach einem der vorhergehenden Ansprüche, bei dem zumindest einer der Hinweise einen Vorschlag umfasst, einen Feuchtigkeitswert (f) in dem Garraum (2) zu erhöhen (S5).

5. Verfahren (S1-S7) nach einem der vorhergehenden Ansprüche, bei dem zumindest einer der Hinweise einen Vorschlag umfasst, dem Garraum (2) Lebensmittel hinzuzugeben (S5).

6. Verfahren (S1-S7) nach einem der vorhergehenden Ansprüche, bei dem das Haushalts-Gargerät (1) dampferzeugerlos ausgestaltet ist.

7. Verfahren (S1-S7) nach einem der Ansprüche 1 bis 5, bei dem das Haushalts-Gargerät (1) einen Dampferzeuger aufweist, der zur manuellen Auslösung mindestens eines Dampfstoßes ausgebildet ist.

8. Verfahren (S1-S7) nach einem der vorhergehenden Ansprüche, bei dem zum Bestimmen unterschiedlicher Schwellwerte (T (t0), T(t1)) unterschiedliche Anteilsfaktoren (y) bestimmt werden.

9. Verfahren (S1-S7) nach einem der vorhergehenden Ansprüche, bei dem zu Beginn des Verfahrens (S1-S7) ein gewünschtes Feuchtigkeitsniveau aus einer Gruppe mehrerer vorgegebener Feuchtigkeitsniveaus abgefragt wird und der Anteilsfaktor (y) abhängig von dem ausgewählten Feuchtigkeitsniveau eingestellt wird (S7).

10. Verfahren (S1-S7) nach einem der vorhergehenden Ansprüche, bei dem der Anteilsfaktor (y) abhängig von einem ausgewählten Garprogramm automatisch eingestellt wird.

11. Haushalts-Gargerät (1), aufweisend einen Garraum (2), einen Sensor (3) zum Bestimmen einer Feuchtigkeit in dem Garraum (2) und eine Steuereinrichtung (4), wobei die Steuereinrichtung (4) dazu eingerichtet ist, das Verfahren (S1-S7) nach einem der vorhergehenden Ansprüche ablaufen zu lassen.

## Claims

1. Method (S1 - S7) for operating a household cooking appliance (1) with a cooking chamber (2), in which
- a humidity value (f) in the cooking chamber (2) is monitored (S4) and
- when the humidity value (f) reaches or falls below a predetermined threshold value (T(t0)), a sign is output (S5),
wherein
- the threshold value (T(t0)) is determined from a reference humidity value (fr(t0)) determined at a predetermined point in time (t0), multiplied by a predetermined associated proportional factor (y) where 0 < y < 1 and
- the humidity value (f) in the cooking chamber (2) continues to be monitored (S4) after outputting the sign and
- when the humidity value (f) reaches or falls below a further predetermined threshold value (T(t1)), which is lower than the previously determined threshold value (T(t0)), a further sign is output (S5).

2. Method (S1-S7) according to claim 1, in which the further predetermined threshold value (T(t1)) corresponds to a humidity value (f(t1)), prevailing after output of the preceding sign, in the cooking chamber (2) multiplied by a predetermined, associated proportion factor (y) where 0 < y < 1.

3. Method (S1 - S7) according to one of the preceding claims, in which before firstly monitoring the humidity value (f) in the cooking chamber (2) at a predetermined point in time (t0), the humidity value (f(t0)) then prevailing in the cooking chamber (2) is assumed to be a first reference humidity value (fr(t0)).

4. Method (S1-S7) according to one of the preceding claims, in which at least one of the signs comprises a suggestion to increase (S5) a humidity value (f) in the cooking chamber (2).

5. Method (S1 - S7) according to one of the preceding claims, in which at least one of the signs comprises a suggestion to add food to the cooking chamber (2).

6. Method (S1-S7) according to one of the preceding claims, in which the household cooking appliance (1) is configured without a steam generator.

7. Method (S1-S7) according to one of claims 1 to 5, in which the household cooking appliance (1) has a steam generator which is embodied to manually trigger at least one steam boost.

8. Method (S1-S7) according to one of the preceding claims, in which different proportional factors (y) are determined in order to determine different threshold values (T(t0), T(t1)).

9. Method (S1-S7) according to one of the preceding claims, in which at the start of the method (S1-S7) a desired humidity level is queried from a group of a number of predetermined humidity levels and the proportional factor (y) is set (S7) as a function of the selected humidity level.

10. Method (S1-S7) according to one of the preceding claims, in which the proportional factor (y) is set as a function of a selected cooking program.

11. Household cooking appliance (1), having a cooking chamber (2), a sensor (3) for determining a humidity in the cooking chamber (2) and a control device (4), wherein the control device (4) is designed to allow the method (S1-S7) to proceed according to one of the preceding claims.

## Revendications

1. Procédé (S1-S7) pour le fonctionnement d'un appareil de cuisson domestique (1) comprenant un compartiment de cuisson (2), dans lequel
- une valeur d'humidité (f) dans le compartiment de cuisson (2) est surveillée (S4), et
- ensuite, lorsque la valeur d'humidité (f) atteint ou devient inférieure à une valeur seuil prédéfinie (T(t0)), une indication est délivrée (S5),
dans lequel :
- la valeur seuil (T(t0)) est déterminée à partir d'une valeur d'humidité de référence (fr(t0)) déterminée à un instant donné (t0), multipliée par un coefficient de pondération (y) associé prédéfini, où 0 < y < 1, et
- ensuite, la valeur d'humidité (f) dans l'espace de cuisson (2) continue à être surveillée (S4) après la délivrance de l'indication, et
- ensuite, lorsque la valeur d'humidité (f) atteint ou devient inférieure à une valeur seuil prédéfinie supplémentaire ((T(t1)), qui est inférieure à la valeur seuil déterminée précédemment (T(t0)), une indication supplémentaire est délivrée (S5).

2. Procédé (S1-S7) selon la revendication 1, dans lequel la valeur seuil prédéfinie supplémentaire (T(t1)) correspond à une valeur d'humidité (f(t1)) régnant dans le compartiment de cuisson (2) après la délivrance de l'indication précédente, multipliée par un coefficient de pondération (y) prédéfini associé, où 0 < y < 1.

3. Procédé (S1-S7) selon l'une des revendications précédentes, dans lequel, avant la surveillance initiale de la valeur d'humidité (f) dans le compartiment de cuisson (2), la valeur d'humidité (f(t0)) régnant alors dans le compartiment de cuisson (2) à un instant donné (t0) est admise en tant qu'une première valeur d'humidité de référence (fr(t0)).

4. Procédé (S1-S7) selon l'une des revendications précédentes, dans lequel au moins une des indications comprend une proposition pour augmenter une valeur d'humidité (f) dans l'espace de cuisson (2) (S5).

5. Procédé (S1-S7) selon l'une des revendications précédentes, dans lequel au moins une des indications comprend une proposition pour ajouter des aliments dans le compartiment de cuisson (2) (S5).

6. Procédé (S1-S7) selon l'une des revendications précédentes, dans lequel l'appareil de cuisson domestique (1) est réalisé sans générateur de vapeur.

7. Procédé (S1-S7) selon l'une des revendications 1 à 5, dans lequel l'appareil de cuisson domestique (1) comprend un générateur de vapeur, qui est configuré pour un déclenchement manuel d'au moins un jet de vapeur.

8. Procédé (S1-S7) selon l'une des revendications précédentes, dans lequel des coefficients de pondération (y) différents sont définis pour la détermination des différentes valeurs seuils (T(t0), T(t1)).

9. Procédé (S1-S7) selon l'une des revendications précédentes, dans lequel, au début du procédé (S1-S7), un niveau d'humidité souhaité est demandé à partir d'un groupe de plusieurs niveaux d'humidité prédéfinis et le coefficient de pondération (y) est réglé en fonction du niveau d'humidité sélectionné (S7).

10. Procédé (S1-S7) selon l'une des revendications précédentes, dans lequel le coefficient de pondération (y) est réglé automatiquement en fonction d'un programme de cuisson sélectionné.

11. Appareil de cuisson domestique (1), comprenant un compartiment de cuisson (2), un capteur (3) pour déterminer une humidité dans le compartiment de cuisson (2) et un dispositif de commande (4), dans lequel le dispositif de commande (4) est configuré pour exécuter le procédé (S1-S7) selon l'une des revendications précédentes.
